# EUROPEAN PATENT SPECIFICATION

(11) **EP 3 547 287 B1**
(45) Date of publication and mention of the grant of the patent: **26.08.2020**
(21) Application number: 18203830.7
(22) Date of filing: 31.10.2018
(51) Int. Cl.: G09B 9/08, G09B 9/12, G05D 1/00, A61N 1/00, A61N 1/36

(54) **VR EMULATOR USING GALVANIC VESTIBULAR STIMULATION DEVICES**
VR-EMULATOR MIT GALVANISCHEN GLEICHGEWICHTSTIMULATIONSVORRICHTUNGEN
ÉMULATEUR DE RÉALITÉ VIRTUELLE AU MOYEN DE DISPOSITIFS DE STIMULATION VESTIBULAIRES GALVANIQUES

(30) Priority: 27.03.2018 US 201815936915
(43) Date of publication of application: 02.10.2019
(73) Proprietor: Bell Helicopter Textron Inc., Fort Worth, TX 76101 (US)
(72) Inventor: NISSEN, Jeffrey Paul, Alba, TX 75410 (US); McCALL, Daniel Brent, Keller, TX 76244 (US); RICCOBONO, Joshua Peter, Arlington, TX 76011 (US)
(74) Representative: Barker Brettell LLP

(56) References cited:
- US-A- 5 762 612
- US-A1- 2014 127 666
- US-A1- 2015 346 722
- US-B1- 8 755 965
- Amy Behrman: "NAVAIR Demonstrates Successful Airborne Control of UAV", , 5 April 2003 (2003-04-05), XP055668839, Retrieved from the Internet: URL:https://www.navy.mil/submit/display.as p?story_id=6681 [retrieved on 2020-02-14]

## Description

### Cross-Reference to Related Applications

This application claims priority under 35 U.S.C. § 119(e) to U.S. Provisional Patent Application No. 62/581,012 filed on November 2, 2017, by Jeffrey Paul Nissen, et al., titled "VR Emulator".

### Statement Regarding Federally Sponsored Research or Development

Not applicable.

### Background

Military, commercial, and other operations generally involve a fleet of different vehicles. Operators of many of these vehicles often require extensive training in order to ensure safe and effective operation of their respective vehicles. However, training pilots of aircraft presents unique training challenges and safety concerns not traditionally present in training operators of ground vehicles, since physical flight of the aircraft requires the aircraft to be airborne. Additionally, some of these vehicles may include the capability of being operated and/or controlled remotely. However, operating and/or controlling a vehicle remotely presents many other challenges, including signal, communication, and/or control latency due to large distances between a control center and a remote vehicle, delays in receiving accurate and/or real-time feedback, and/or other deficiencies that materially affect critical decision making during an operation. This presents a technical problem to be solved in the form of reducing signal, communication, and/or control latency caused by large distances between a control center and a remote vehicle.

Examples of materials and methods for manipulating nystagmus and the related vestibular system of a user with coupling of galvanic vestibular stimulation (GVS) and visual cueing are disclosed in US2014127666. Use of GVS may be applied to simulation, alleviating motion sickness, and directional cueing of a user to a precise target location.

An example mobile vehicle simulator is disclosed in US8755965. The simulator is integrated with a vehicle control system to provide a mobile simulator based vehicle control system. The vehicle simulator included in the simulator based control system allows for a vehicle operator to be moved in two or three axis of rotation while, in some embodiments, also allowing for sudden jolts or motion similar to what might be encountered when a pilot encounters air turbulence or a driver encounters ruts or pot holes.

An example architecture for a multimodal, multiplatform switching, unmanned vehicle (UV) swarm system is disclosed in US2015346722. The architecture includes onboard and ground processors to handle and integrate multiple sensor inputs generating a unique UV pilot experience for a remote drone pilot (RDP) via a virtual augmented reality cockpit (VARC). The RDP is monitored by an operational control system and an experienced control pilot. A ground processor handles real-time localization, forwarding of commands, generation and delivery of augmented content to users, along with safety features and overrides. The UVs onboard processors and autopilot execute the commands and provide a redundant source of safety features and override in the case of loss of signal. The UVs perform customizable missions, with adjustable rules for differing skill levels. RDPs experience real-time virtual piloting of the UV with augmented interactive and actionable visual and audio content delivered to them via VARC systems.

An example use of galvanic stimulation of a user's vestibular system utilized in conjunction with visual stimulation within virtual reality environments is disclosed in US5762612.

The document: "NAVAIR Demonstrates Successful Airborne Control of UAV", 5 April 2003 (2003-04-05), XP055668839, from Amy Behrman, teaches remote control of a drone from a master aircraft.

### Brief Description of The Drawings

**Figure 1** is a side view of a virtual reality ("VR") flight emulator according to this disclosure.
**Figure 2** is a diagram of an embodiment of a pilot control interface according to this disclosure.
**Figure 3** is a schematic diagram of a virtual reality ("VR") flight emulator system according to this disclosure.
**Figure 4** is a schematic diagram of a virtual reality ("VR") flight teleport system according to this disclosure.
**Figure 5** is a flowchart of a method of operating a virtual reality ("VR") flight emulator according to this disclosure.
**Figure 6** is a schematic diagram of a general-purpose processor (e.g. electronic controller or computer) system suitable for implementing the embodiments of this disclosure.

### Detailed Description

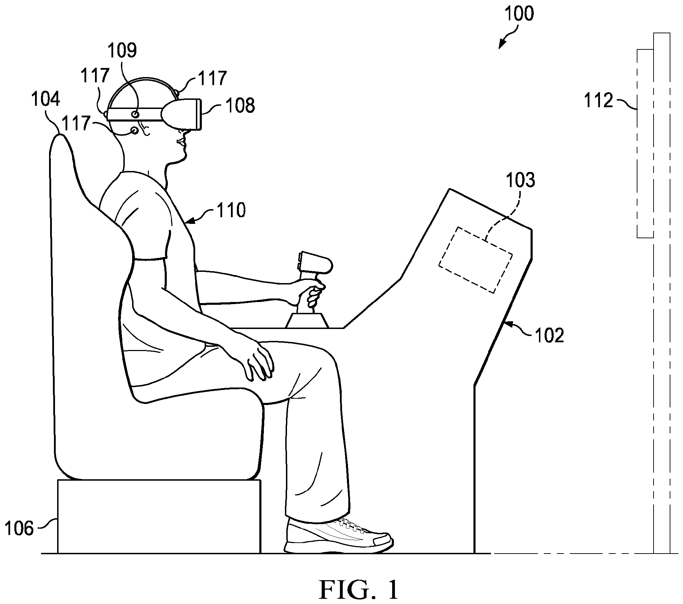

Referring now to Figure 1, a simplified side view of a virtual reality ("VR") flight emulator 100 is shown according to this disclosure. Flight emulator 100 generally comprises a virtual reality ("VR") system that simulates control, operation, and response of a vehicle, which may be a virtual vehicle or an actual remote vehicle (e.g., helicopter, tiltrotor, vertical take-off and landing (VTOL) aircraft, etc.), and allows a user 110 to provide inputs via a pilot control interface 102 to control, operate, and/or otherwise manipulate the vehicle. Further, it will be appreciated that while flight emulator 100 is described in the context of an aircraft, flight emulator 100 may also be applicable to other mobile equipment and vehicle types, including those found in automotive, construction, and marine applications. Flight emulator 100 comprises a pilot control interface 102, a seat 104 connected to a base 106 (or other support system for seat 104), and a head-mounted display 108 worn by a user 110 that comprises a plurality of sensors, emitters, and/or reflectors 109 used to detect head movement of the user 110. In some embodiments, flight emulator 100 may also comprise an external display 112 that replicates images shown by the head-mounted display 108. Additionally, flight emulator 100 also comprises a plurality of galvanic vestibular stimulation (GVS) devices 117. In some embodiments, the GVS devices 117 may be attached to or carried by the head-mounted display 108. However, in other embodiments, the GVS devices 117, the head-mounted display 108, and/or the plurality of sensors, emitters, and/or reflectors 109 may be incorporated into a helmet worn by a user 110.

Pilot control interface 102 generally comprises physical and/or virtual flight control input hardware (e.g. flight input controls) configured to receive inputs and/or commands from user 110 to control operation of the vehicle and make the vehicle respond. Pilot control interface 102 also comprises vehicle and environmental virtual reality ("VR") software 103 configured to respond to the inputs and/or commands from the user 110 and simulate operational response of the vehicle in response to the inputs and/or commands from the user 110. The pilot control interface 102 is also configured to simulate operation of the vehicle through operation of the GVS devices 117 and selectively displaying and/or adjusting graphical imagery shown to a user 110 on the head-mounted display 108. The pilot control interface 102 may be configured for a vehicle controlled by the flight emulator 100 or may comprise a generic system comprising physical and/or virtual hardware components or input controls common to all aircraft or other vehicles. Additionally, as will be discussed later herein, the pilot control interface 102 may also be configured to control the vehicle associated with the flight emulator 100 as well as a remote or virtual slave vehicle upon virtually teleporting into the slave vehicle.

The GVS devices 117 generally comprise small electrodes that are disposed behind each of a left and right ear of a user 110 and on each of a front and back of the head of user 110. GVS devices 117 operate by passing a current between GVS devices 117 to trick the user 110 to feel a motion, orientation, and/or force applied to him/her. For example, a current may be passed between GVS devices 117 to make a user 110 think he/she is experiencing a turning motion, tilting motion, banked orientation, and/or acceleration and deceleration of an aircraft. By utilizing GVS devices 117, passing current between the GVS devices 117 tricks a user to feel the motion of, orientation of, and/or forces acting on a aircraft, such as changes in pitch, roll, and yaw. Accordingly, when a user 110 has virtually teleported into a slave vehicle using the flight emulator 100, the motion of, orientation of, and/or forces acting on the slave vehicle as a result of operational parameters (e.g. speed, turning), environmental factors (e.g. wind gusts), and/or inputs of the user 110 through the pilot control interface 102 are emulated on or replicated to the user 110 through selective operation of the GVS devices 117.

The head-mounted display 108 comprises a virtual reality ("VR") display that is worn on the head of a user 110. The head-mounted display 108 displays imagery (e.g., simulated environment) visible to the user 110 that simulates the imagery of the environment. The head-mounted display 108 is also configured to display portions of the pilot control interface 102 when the pilot control interface 102 is in the line of sight of user 110. The head-mounted display 108 comprises a plurality of sensors, emitters, and/or reflectors 109 used to detect and track head movement of the user 110. The sensors, emitters, and/or reflectors 109 and the head-mounted display 108 are each coupled to components and/or software 103 of the pilot control interface 102, such that the imagery displayed to a user 110 on the head-mounted display 108 changes in response to head movement of the user 110. For example, when user 110 looks forward, user 110 may see through the windshield of a cockpit of a vehicle and portions of the pilot control interface 102, and when user 110 looks to the left, user 110 may see a co-pilot or leftward portions of the pilot control interface 102. Additionally, when user 110 is not virtually teleported into a remote vehicle, the head-mounted display 108 may not display imagery. Furthermore, when user 110 is not virtually teleported into a remote vehicle, the head-mounted display 108 may show a virtual representation of a state of a remote fleet of vehicles.

In operation, flight emulator 100 provides a user 110 the capability to operate a remote or virtual slave vehicle while in the flight emulator 100. In some embodiments, the flight emulator 100 may be a standalone stationary flight emulator 100. However, in other embodiments, the flight emulator 100 may be installed in a vehicle, such as an aircraft. When user 110 is virtually teleported into the slave vehicle, inputs provided by user 110 through the pilot control interface 102 cause the slave vehicle to respond and further causes operation of the GVS devices 117 to simulate the effect of the motion of, orientation of, and/or forces acting on the slave vehicle on the user 110. Additionally, the head-mounted display 108 may continuously adjust the imagery displayed to the user 110 to reflect what an operator of the slave vehicle would see in response to the motion detected by the sensors, emitters, and/or reflectors 109. For example, if user 110 provides an input to turn an aircraft to the left, current may be passed between GVS devices 117 to cause the user 110 to feel the bank of the turn as would be experienced by the aircraft, while also adjusting the imagery displayed to the user 110 on the head-mounted display 108 to simulate the orientation of the aircraft. In a further example, if user 110 pitches the aircraft forward, current may be passed between GVS devices 117 on the front and rear of the head of user 110 to cause the user 110 to feel the pitch of the turn as experienced by the aircraft.

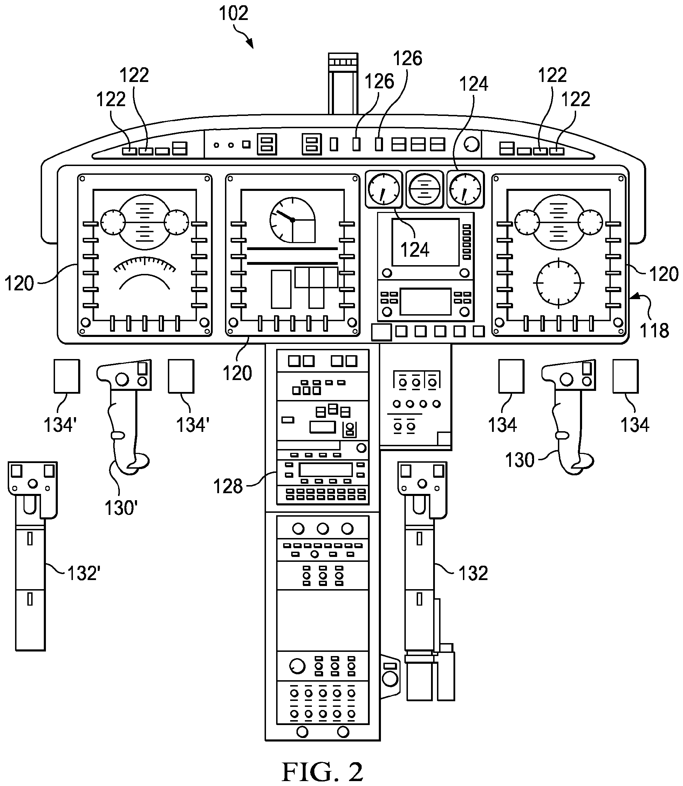

Referring now to Figure 2, a diagram of a pilot control interface 102 is shown according to this disclosure. In the embodiment shown, pilot control interface 102 comprises an instrument panel 118 comprising a plurality of touchscreen displays 120, warning and/or notification lights 122, mechanical and/or electrical gauges 124, mechanical and/or electrical switches 126, and/or other instrumentation 128 necessary to communicate and/or adjust operational parameters of the virtual or vehicle carrying the flight emulator 100 in addition to a remote vehicle. However, in some embodiments, the pilot control interface 102 may comprise a virtual instrument panel 118 of a remote vehicle. Further, in some embodiments, the pilot control interface 102 may comprise a blank virtual display or multiple displays that populate with the appropriate gauges when the head mounted display 108 is worn by a user 110. Pilot control interface 102 may also comprise cyclic control 130, collective control 132, and/or pedals 134 for selectively manipulating operation of the vehicle. Additionally, in some embodiments, pilot control interface 102 may also comprise co-pilot cyclic control 130', co-pilot collective control 132', and/or co-pilot pedals 134'. In some embodiments, one or more touchscreen displays 120 may display a list of all vehicles connected through a network. Additionally, one or more touchscreen displays 120 may selectively alter their respective displays depending on the type of vehicle being controlled. As such, a single pilot control interface 102 or flight emulator 100 may be configured to emulate multiple vehicles.

Instrument panel 118 may generally comprise any combination of virtual, physical, simulated, and/or actual components 120, 122, 124, 126, 128, 130, 130', 132, 132', 134, 134' that allow a user 110 control over the present vehicle and a virtual or remote vehicle. In some embodiments, instrument panel 118 may comprise a mock instrument panel that allows physical interaction by a user 110 with one or more of the physical components 120, 122, 124, 126, 128, 130, 130', 132, 132', 134, 134' that would be present in an actual vehicle. As such, the head-mounted display 108 may be at least partially augmented or transparent to allow a user 110 to see and interact with one or more components 120, 122, 124, 126, 128, 130, 130', 132, 132', 134, 134'. However, in some embodiments, one or more of the components 120, 122, 124, 126, 128, 130, 130', 132, 132', 134, 134' on the instrument panel 118 may comprise a non-functioning "dummy" component. Additionally, the instrument panel 118 may comprise a plurality of sensors, emitters, reflectors, and/or cameras used to anticipate or detect movement (e.g., arm motion, head motion) of a user 110 towards a component 120, 122, 124, 126, 128, 130, 130', 132, 132', 134, 134' to anticipate a command in order to reduce latency in the pilot control interface 102. Further, one or more touchscreen displays 120 may change its display depending on whether the flight emulator 100 is being used to control a master vehicle or a remote vehicle.

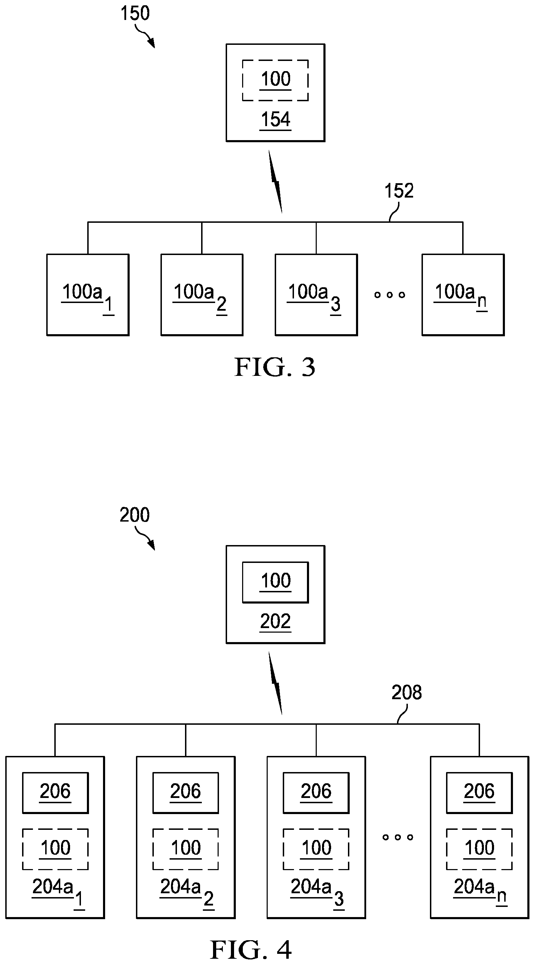

Referring now to Figure 3, a schematic diagram of a virtual reality ("VR") flight emulator system 150 is shown according to this disclosure. In the embodiment shown, flight emulator system 150 comprises a plurality of flight emulators 100 selectively connected in communication through network 152, which may be wired, wireless, or any combination thereof. It will be appreciated that flight emulator system 150 may comprise any number of flight emulators 100. Additionally, flight emulator system 150 also comprises a master flight emulator 154. Master flight emulator 154 comprises a flight emulator 100 selectively connected in communication with each of the plurality of slave flight emulators 100a1-n through network 152. However, the flight emulator 100 of the master flight emulator 154 comprises the capability to selectively virtually teleport user 110 of the master flight emulator 154 into a slave flight emulator 100a1-n to assume control of the pilot control interface 102 of any of the slave flight emulators 100a1-n connected through the network 152. This effectively allows the user 110 of the master flight emulator 154 to control the vehicle associated with the slave flight emulator 100a1-n into which the user 110 of the master flight emulator 154 has virtually teleported. In some embodiments, this capability may be encoded in the software 103 and/or made possible through components of the pilot control interface 102 of the master flight emulator 154. However, in other embodiments, this capability may be present in each of the flight emulators 100 but overridden or disabled in each of the slave flight emulators 100a1-n by the master flight emulator 154.

By connecting multiple flight emulators 100 through network 152, the flight emulators 100 may be flown in the same simulated environment. This allows for multi-vehicle training that may require operating a mix of various aircraft simultaneously to build teaming protocol and flight patterns. As such, a user 110 (e.g., instructor) in the master flight emulator 154 may monitor each of the flight emulators 100 operated by a user 110 (e.g., student or training participant). In some embodiments, the master flight emulator 154 may not be simulating a vehicle actively participating in a training exercise on the network 152. Thus, an instructor in the master flight emulator 154 may virtually teleport into a slave flight emulator 100a1-n without taking over control of the pilot control interface 102. This is referred to as a passive teleport. In a passive teleport, the instructor in the master flight emulator 154 perceives the simulated environment of the slave flight emulator 100a1-n that the instructor in the master flight emulator 154 has virtually teleported into through the head-mounted display 108 associated with the master flight emulator 154. In some embodiments, the head-mounted display 108 worn by the instructor in the master flight emulator 154 may replicate imagery seen by the user in the slave flight emulator 100a1-n. However, in some embodiments, the head-mounted display 108 worn by the instructor in the master flight emulator 154 may operate independently and track head movement of the instructor via sensors, emitters, and/or reflectors 109.

When the instructor has virtually teleported into a slave flight emulator 100a1-n, any motion of, orientation of, and/or forces acting on the master aircraft controlled by the master flight emulator 154 are minimized or preferably cancelled via the GVS devices 117. The GVS devices 117 may be further operated such that the instructor in the master flight emulator 154 experiences the motion of, orientation of, and/or forces acting on the vehicle controlled by the slave flight emulator 100a1-n into which the instructor in the master flight emulator 154 has virtually teleported. However, if the master flight emulator 154 is not simulating a vehicle actively participating in a training exercise, the GVS devices 117 of the master flight emulator 154 may be simply operated to impart motion of, orientation of, and/or forces acting on the vehicle controlled by the slave flight emulator 100a1-n. In both scenarios, this allows the instructor in the master flight emulator 154 to "feel" only the motion of, orientation of, and/or forces acting on the slave flight emulator 100a1-n as if the instructor were in the slave flight emulator 100a1-n.

Still further, once virtually teleported into a slave flight emulator 100a1-n, the instructor may receive feedback through the pilot control interface 102 and instrument panel 118 of the master flight emulator 154 in response to a user 110 in the slave flight emulator 100a1-n providing inputs through the pilot control interface 102 of the slave flight emulator 100a1-n. Thus, for example, the instructor preferably feels the amount of force or movement a user 110 may be using to manipulate the cyclic control 130, collective control 132, and pedals 134 of the slave flight emulator 100a1-n. The instructor further may be able to observe readings on the gauges 124 and position of switches 126 of the slave flight emulator 100a1-n through emulation of the pilot control interface 102 of the slave flight emulator 100a1-n through the pilot control interface 102 of the master flight emulator 154. This allows the instructor to fully observe operation of the slave flight emulator 100a1-n as if the instructor were actually in the slave flight emulator 100a1-n.

By virtually teleporting the instructor in the master flight emulator 154 into a slave flight emulator 100a1-n, the instructor in the master flight emulator 154 may selectively assume control of the pilot control interface 102 of a slave flight emulator 100a1-n. This is referred to as an active teleport. In the active teleport, the instructor in the master flight emulator 154 may provide inputs through the pilot control interface 102 of the master flight emulator 154 that are imparted into the slave flight emulator 100a1-n. In some embodiments, the pilot control interface 102 of the slave flight emulator 100a1-n may be locked out, such that a user 110 may not provide inputs. However, the components of the pilot control interface 102 of the slave flight emulator 100a1-n may be driven by and move in accordance with inputs made by the instructor through the pilot control interface 102 of the master flight emulator 154. This allows the instructor in the master flight emulator 154 to operate the slave flight emulator 100a1-n, while the user 110 in the slave flight emulator 100a1-n receives real-time feedback and "feels" the response of the simulated vehicle associated with the slave flight emulator 100a1-n in response to the inputs made by the instructor in the master flight emulator 154.

Additionally, in the active teleport, the head-mounted display 108 worn by the instructor in the master flight emulator 154 replicates imagery from the slave flight emulator 100a1-n. Thus, when virtually teleported, the instructor in the master flight emulator 154 may selectively observe gauges, instruments, and controls in the slave flight emulator 100a1-n that may not be replicated by the pilot control interface 102 of the master flight emulator 154. Additionally, the head-mounted display 108 worn by the instructor in the master flight emulator 154 is used to track head movement of the instructor via the sensors, emitters, and/or reflectors 109 and the imagery displayed to the instructor on the head-mounted display 108 is responsively adjusted, thereby allowing the instructor to selectively observe the environment of the slave flight emulator 100a1-n. Accordingly, feedback through the pilot control interface 102, the head-mounted display 108, and the GVS devices 117 of the master flight emulator 154 provides real-time emulation capability that allows the instructor to fully observe and control operation of the slave flight emulator 100a1-n when the instructor is virtually teleported as if the instructor of the master flight emulator 154 were actually in the slave flight emulator 100a1-n.

Furthermore, in the active teleport, inputs made by the instructor that impart motion, orientation, and/or forces into the vehicle associated with the slave flight emulator 100a1-n are emulated or replicated to the user 110 of the slave flight emulator 100a1-n through selective operation of the GVS devices 117 of the slave flight emulator 100a1-n. This also allows the user 110 of the slave flight emulator 100a1-n to associate inputs made by the instructor and associated response of the simulated vehicle. For example, where a user 110 is providing too much input on a cyclic control 130, the instructor may virtually teleport into the slave flight emulator 100a1-n of the user 110 and provide the correct cyclic control 130 input necessary to make a smooth, wide-radius turn or correct collective control 132 input necessary for a smooth takeoff or landing. As such, this real-time feedback to the user 110 of the slave flight emulator 100a1-n may help a user 110 more effectively learn the correct inputs to properly operate a vehicle associated with a slave flight emulator 100a1-n.

Flight teleport system 150 is also capable of utilizing the control loading system (CLS) of a flight emulator 100 to selectively record and playback of a training exercise or flight mission, thereby allowing a user 110 to receive feedback through the pilot control interface 102 and "feel" the amount and direction of control inputs necessary to expertly pilot the simulated vehicle without having a training instructor onboard. Additionally, playback of a training exercise or flight mission also imparts simulated motion, orientation, and/or forces to a user 110 by selectively operating the GVS devices 117 of each flight emulator 100, thereby allowing a user 110 to associate inputs with various responses of the simulated vehicle while also providing visual imagery through the head-mounted display 108 of each flight emulator 100. Playback of a training exercise or flight mission recorded from previous training exercises or simulated pre-programmed missions which provide correct inputs in response to various changes in operational parameters or environmental factors. Further, since multiple flight emulators 100 are connected through network 152, playback may control multiple flight emulators 100 simultaneously, allowing several users 110 to experience feedback from a single simulated vehicle or a fleet of various simulated vehicles.

Referring now to Figure 4, a schematic diagram of a virtual reality ("VR") flight teleport system 200 is shown according to this disclosure. Flight teleport system 200 comprises a master aircraft 202 and at least one remote aircraft 204 connected in communication through a wireless communication network 208. However, it will be appreciated that flight teleport system 200 may comprise any number of remote aircraft 204a1-n. Master aircraft 202 comprises a flight emulator 100 that may be in place of a pilot's seat, a co-pilot's seat, or in another location of the master aircraft 202, while each of the plurality of remote aircraft 204 comprise a flight control system 206 as known in the art for operating the associated remote aircraft 204. Additionally, in some embodiments, some or all of the remote aircraft 204 may also comprise a flight emulator 100. Master aircraft 202 may be substantially similar to any of the remote aircraft 204. However, flight emulator 100 of the master aircraft 202 comprises the ability to selectively virtually teleport user 110 into a remote aircraft 204 to assume control of any of the so-called remote "slave" aircraft 204 on the network 208 via the flight emulator 100 in the master aircraft 202. This effectively allows a user 110 of the master aircraft 202, which may be a pilot, co-pilot, or other crew member of the master aircraft 202, to virtually teleport into and assume control of a fleet of remote aircraft 204 connected through the network 208.

In some embodiments, this capability may be encoded in the software 103 and/or made possible through components of the pilot control interface 102 of the flight emulator 100 of the master aircraft 202. Further, in some embodiments, it will be appreciated that the flight control system 206 of any of the remote aircraft 204 may comprise components or software necessary to allow the user 110 of the flight emulator 100 of the master aircraft 202 to assume control of its flight control system 206 and/or any of its other control systems (e.g., landing gear, weaponry). As such, when the user 110 of the flight emulator 100 of the master aircraft 202 is virtually teleported into a remote aircraft 204, user 110 of the flight emulator 100 assumes at least partial control of the remote aircraft 204 through the network 208. When a remote aircraft 204 is virtually teleported into by a user 110, the flight control system 206 of the remote aircraft 204 may be locked out or disabled, such that a pilot of the remote aircraft 204 may not provide inputs to alter operation of the remote aircraft 204.

When a user 110 of the master aircraft 202 virtually teleports into another aircraft 204, GVS devices 117 of the flight emulator 100 in the master aircraft 202 may be selectively operated to minimize or preferably cancel the motion of, orientation of, and/or forces acting on the master aircraft 202. The GVS devices 117 may be further operated to impart the simulated motion of, orientation of, and/or forces acting on the remote aircraft 204. This allows the pilot in the master aircraft 202 to "feel" the motion of, orientation of, and/or forces acting on the slave aircraft 204. For example, a pilot of the master aircraft 202 may place the master aircraft 202 on a predetermined and/or automated flight plan such as a straight flight path, a large radius turn, or a flat hover, then virtually teleport into a remote aircraft 204. When user 110 is virtually teleported into the remote aircraft 204, the motion of, orientation of, and/or forces acting on the master aircraft 202 are minimized or preferably cancelled by passing a current between selective GVS devices 117 of the flight emulator 100 in the master aircraft 202, and the GVS devices 117 may be operated such that the user 110 experiences the motion of, orientation of, and/or forces acting on the remote aircraft 204. This may help a pilot in the master aircraft 202 effectively operate the remote aircraft 204 or diagnose aircraft performance issues affecting the flight of the remote aircraft 204.

Furthermore, once virtually teleported into a remote aircraft 204, the user 110 in the master aircraft 202 also receives feedback through the pilot control interface 102 and instrument panel 118 of the flight emulator 100 of the master aircraft 202. Thus, for example, the user 110 may receive feedback via the cyclic control 130, collective control 132, and pedals 134 from the flight control system 206 from the remote aircraft 204. User 110 further may be able to observe readings on the gauges 124 and position of switches 126 of the flight emulator 100 through emulation of the flight control system 206 of the remote aircraft 204 on the pilot control interface 102. Additionally, the head-mounted display 108 worn by the user 110 in the master aircraft 202 may replicate imagery from the remote aircraft 204. Thus, the user 110 in the master aircraft 202 may selectively observe gauges, instruments, and controls in the remote aircraft 204 that may not be replicated by the pilot control interface 102 when virtually teleported. Additionally, the head-mounted display 108 worn by the user 110 in the master aircraft 202 is used to detect head movement of the pilot via the sensors, emitters, and/or reflectors 109 and responsively adjusts the imagery displayed to the user 110 on the head-mounted display 108, thereby allowing the user 110 in the master aircraft 202 to selectively observe the environment of the remote aircraft 204. Accordingly, feedback through the pilot control interface 102, the head-mounted display 108, and the GVS devices 117 of the flight emulator 100 in the master aircraft 202 provides real-time emulation capability that allows the pilot of the master aircraft 202 to fully observe and control operation of the remote aircraft 204 when virtually teleported as if the pilot of the master aircraft 202 were actually in the remote aircraft 204.

As an example, a piloted master aircraft 202 and a plurality of unmanned remote aircraft 204 may be flown in an attack and/or utility configuration simultaneously on a mission. A pilot or co-pilot of the master aircraft 202 may place the master aircraft 202 on a predetermined and/or automated flight plan, while virtually teleporting into an attack remote aircraft 204. When virtually teleported into the remote aircraft 204, the pilot or co-pilot of the master aircraft 202 is able to see through the head-mounted display 108 the environment surrounding the remote aircraft 204. The pilot of the master aircraft 202 may then assume control of the flight control system 206 of the attack remote aircraft 204 through the flight emulator 100 in the master aircraft 202 to perform a strike and/or other operation, then regain command of his/her physical master aircraft 202. The pilot or co-pilot of the master aircraft 202 may then virtually teleport into another remote aircraft 204 to perform specific operations before ending use of the flight emulator 100 in the master aircraft 202 and returning to operating the master aircraft 202. Thus, in this example, there is always a "pilot in command" when a critical decision, such as an offensive strike, is made, and the "pilot in command" of the remote aircraft 204 is the virtually teleported pilot or co-pilot in the master aircraft 202.

By virtually teleporting a user 110 from the master aircraft 202 into a nearby remote aircraft 204 via network 208, latency of communication (e.g., control signals, feedback, etc.) between the master aircraft 202 and the remote aircraft 204 may be significantly reduced when compared to a distant ground-based control station. Additionally, the network 208 may allow communication and/or control without the use of satellites. Furthermore, the network 208 may use encrypted control inputs between a master aircraft 202 and a remote aircraft 204 to prevent the pilot control interface 102 and/or flight control system 206 of an aircraft 202 or remote aircraft 204 from being hacked or overridden. Additionally, in some embodiments, it will be appreciated that the virtually teleporting capabilities of the flight emulator 100 in the master aircraft 202 may be present in one or more of the remote aircraft 204 connected through network 208, so that multiple users 110 may virtually teleport into any of the other remote aircraft 204 on the network 208. As such, the network 208 may allow multiple teleporting users 110 simultaneously. In some embodiments, this may allow a user 110 of one remote aircraft 204 to overtake the controls of another remote aircraft 204 having an incapacitated pilot. As such, providing the virtually teleporting capabilities of the flight emulator 100 provides benefits such as increased situational awareness, increased accuracy, and/or quicker decision making during flight missions.

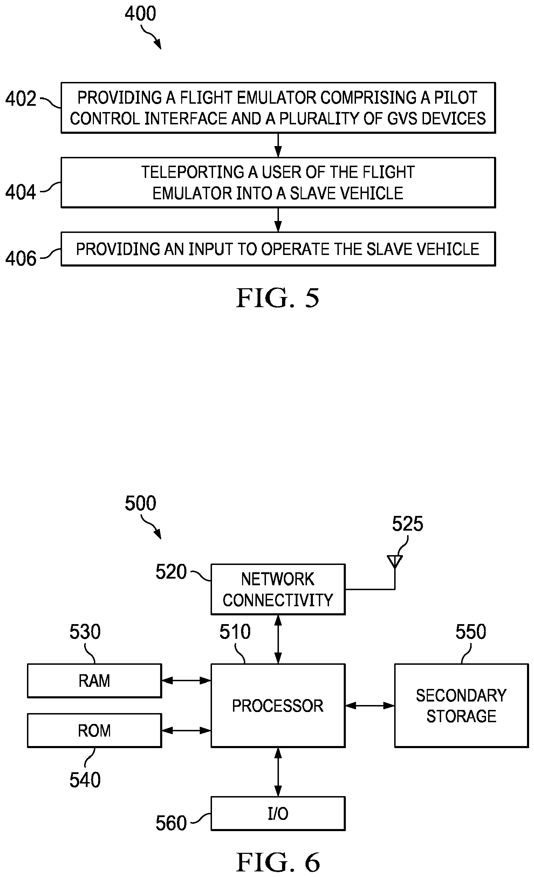

Referring now to Figure 5, a flowchart of a method 400 of operating a virtual reality ("VR") flight emulator 100 is shown according to this disclosure. Method 400 begins at block 402 by providing a flight emulator 100 comprising a pilot control interface 102 and a plurality of GVS devices 117. In some embodiments, the flight emulator 100 may be a master flight emulator 154 or a master aircraft 202. Method 400 continues at block 404 by virtually teleporting a user 110 of the flight emulator 100 into a slave vehicle. The slave vehicle may be a virtual vehicle controlled by a slave flight emulator 100a1-n or a remote aircraft 204a1-n connected via a network 152, 208. When the user 110 is virtually teleported into the slave vehicle, flight emulator 100 may be selectively configured to emulate the motion of, orientation of, and/or forces acting on the slave vehicle via selective operation of the GVS devices 117 in the flight emulator 100 to simulate the motion of, orientation of, and/or forces acting on the slave vehicle. This is further accomplished via adjustment, movement, selection, or change of display of components 120, 122, 124, 126, 128, 130, 130', 132, 132', 134, 134' of the pilot control interface 102. Further, it will be appreciated that this is accomplished via continuously replicating visual imagery through the head-mounted display 108 depending on the head movement and/or orientation of the user 100 of the flight emulator 100. Method 400 concludes at block 406 by the user 110 of the flight emulator 100 providing an input to operate the slave vehicle. This may be accomplished via the user 110 in a master flight emulator 154 or a pilot in a master aircraft 202 providing an input via a component 118, 120, 122, 124, 126, 128, 130, 130', 132, 132', 134, 134' of the pilot control interface 102 that causes a slave flight emulator 100a1-n or the flight control system 206 of a remote aircraft 204 to adjust, alter, change, or select a mode or parameter of operation of the remote aircraft 204. Further, inputs that result in changes in motion of, orientation of, and/or forces acting on the slave aircraft are imparted to the user 110 of the flight emulator 100 via the GVS devices 117 in the flight emulator 100.

Referring now to Figure 6, a schematic diagram of a general-purpose processor (e.g. electronic controller or computer) system 500 suitable for implementing the embodiments of this disclosure is shown. System 500 that includes a processing component 510 suitable for implementing one or more embodiments disclosed herein. Particularly, each of the above-described flight emulators 100, pilot control interfaces 102, instrument panels 118, flight emulator systems 150, and/or flight teleport systems 200 may comprise one or more systems 500. In addition to the processor 510 (which may be referred to as a central processor unit or CPU), the system 500 might include network connectivity devices 520, random access memory (RAM) 530, read only memory (ROM) 540, secondary storage 550, and input/output (I/O) devices 560. In some cases, some of these components may not be present or may be combined in various combinations with one another or with other components not shown. These components might be located in a single physical entity or in more than one physical entity. Any actions described herein as being taken by the processor 510 might be taken by the processor 510 alone or by the processor 510 in conjunction with one or more components shown or not shown in the system 500. It will be appreciated that the data described herein can be stored in memory and/or in one or more databases.

The processor 510 executes instructions, codes, computer programs, or scripts that it might access from the network connectivity devices 520, RAM 530, ROM 540, or secondary storage 550 (which might include various disk-based systems such as hard disk, floppy disk, optical disk, or other drive). While only one processor 510 is shown, multiple processors may be present. Thus, while instructions may be discussed as being executed by processor 510, the instructions may be executed simultaneously, serially, or otherwise by one or multiple processors 510. The processor 510 may be implemented as one or more CPU chips and/or application specific integrated chips (ASICs).

The network connectivity devices 520 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, and/or other well-known devices for connecting to networks. These network connectivity devices 520 may enable the processor 510 to communicate with the Internet or one or more telecommunications networks or other networks from which the processor 510 might receive information or to which the processor 510 might output information.

The network connectivity devices 520 might also include one or more transceiver components 525 capable of transmitting and/or receiving data wirelessly in the form of electromagnetic waves, such as radio frequency signals or microwave frequency signals. Alternatively, the data may propagate in or on the surface of electrical conductors, in coaxial cables, in waveguides, in optical media such as optical fiber, or in other media. The transceiver component 525 might include separate receiving and transmitting units or a single transceiver. Information transmitted or received by the transceiver 525 may include data that has been processed by the processor 510 or instructions that are to be executed by processor 510. Such information may be received from and outputted to a network in the form, for example, of a computer data baseband signal or signal embodied in a carrier wave. The data may be ordered according to different sequences as may be desirable for either processing or generating the data or transmitting or receiving the data. The baseband signal, the signal embedded in the carrier wave, or other types of signals currently used or hereafter developed may be referred to as the transmission medium and may be generated according to several methods well known to one skilled in the art.

The RAM 530 might be used to store volatile data and perhaps to store instructions that are executed by the processor 510. The ROM 540 is a non-volatile memory device that typically has a smaller memory capacity than the memory capacity of the secondary storage 550. ROM 540 might be used to store instructions and perhaps data that are read during execution of the instructions. Access to both RAM 530 and ROM 540 is typically faster than to secondary storage 550. The secondary storage 550 is typically comprised of one or more disk drives or tape drives and might be used for non-volatile storage of data or as an over-flow data storage device if RAM 530 is not large enough to hold all working data. Secondary storage 550 may be used to store programs or instructions that are loaded into RAM 530 when such programs are selected for execution or information is needed.

The I/O devices 560 may include liquid crystal displays (LCDs), touchscreen displays, keyboards, keypads, switches, dials, mice, track balls, voice recognizers, card readers, paper tape readers, printers, video monitors, transducers, sensors, or other well-known input or output devices. Also, the transceiver 525 might be considered to be a component of the I/O devices 560 instead of or in addition to being a component of the network connectivity devices 520. Some or all of the I/O devices 560 may be substantially similar to various components disclosed herein and/or may be components of the above-described flight emulators 100, pilot control interfaces 102, instrument panels 118, flight emulator systems 150, and/or flight teleport systems 200.

At least one embodiment is disclosed, and variations, combinations, and/or modifications of the embodiment(s) and/or features of the embodiment(s) made by a person having ordinary skill in the art are within the scope of this disclosure. Alternative embodiments that result from combining, integrating, and/or omitting features of the embodiment(s) are also within the scope of this disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, Rl, and an upper limit, Ru, is disclosed, any number falling within the range is specifically disclosed. In particular, the following numbers within the range are specifically disclosed: R=R1 +k ^{∗} (Ru-Rl), wherein k is a variable ranging from 1 percent to 100 percent with a 1 percent increment, i.e., k is 1 percent, 2 percent, 3 percent, 4 percent, 5 percent,...50 percent, 51 percent, 52 percent,..., 95 percent, 96 percent, 95 percent, 98 percent, 99 percent, or 100 percent. Moreover, any numerical range defined by two R numbers as defined in the above is also specifically disclosed.

## Claims

1. A master aircraft (202), comprising:
a virtual reality flight emulator (100), comprising:
a pilot control interface (102);
wherein the flight emulator (100) is configured to control with the pilot control interface (102) a virtual or remote slave aircraft (204) connected through a network (208) to the flight emulator (100) when a user (110) of the flight emulator (100) virtually teleports through the network (208) into the virtual or remote slave aircraft (204) **characterised by** the flight emulator (100) comprising a plurality of galvanic vestibular stimulation (GVS) (117) devices worn by the user (110); and
wherein the GVS devices (117) are configured to minimize for the user (110) the perception of the motion of, orientation of, or forces acting on the master aircraft (202) while simulating the motion of, orientation of, or forces acting on the virtual or remote slave aircraft (204) when the user (110) is virtually teleported into the virtual or remote slave aircraft (204).

2. A virtual reality flight system, comprising:
the master aircraft (202) of claim 1; and
at least one virtual or remote slave aircraft (204) connected in communication through a network (208) to the flight emulator (100).

3. The master aircraft (202) of claim 1, wherein the pilot control interface (102) is configured to allow the user (110) to control operation of the virtual or remote slave aircraft (204) when the user (110) is virtually teleported into the virtual or remote slave aircraft (204); or
the virtual reality flight system of claim 2, wherein the pilot control interface (102) is configured to allow the user (110) to control operation of the virtual or remote slave aircraft (204) when the user (110) is virtually teleported into the virtual or remote slave aircraft (204).

4. The master aircraft (202) of claim 3, wherein the GVS devices (117) are located behind each of a left and a right ear and on each of a front and back of a head of the user (110).

5. The virtual reality flight system of claim 3, wherein the GVS devices (117) are configured to selectively pass current between the GVS devices (117) that cause user (110) to feel motion of, orientation of, or forces acting on the virtual or remote slave aircraft (204) when the user (110) is virtually teleported into the virtual or remote slave aircraft (204).

6. The master aircraft (202) of claim 4, wherein the GVS devices (117) simulate changes in pitch, roll, and yaw of the virtual or remote slave aircraft (204) to the user (110) when the user (110) is virtually teleported into the virtual or remote slave aircraft (204) in response to an input made by the user (110) via the pilot control interface (102) to control the virtual or remote slave aircraft (204); or
the virtual reality flight system of claim 5, wherein the GVS devices (117) impart changes in pitch, roll, and yaw of the virtual or remote slave aircraft (204) to the user (110) when the user (110) is virtually teleported into the virtual or remote slave aircraft (204) in response to an input made by the user (110) via the pilot control interface (102) to control the virtual or remote slave aircraft (204).

7. The master aircraft (202) of claim 6, wherein the flight emulator (100) comprises a head-mounted display worn by the user (110), and wherein the head-mounted display is configured to replicate visual imagery related to the virtual or remote slave aircraft (204) and further configured to continuously adjust the imagery in response to head movement of the user (110) tracked by a plurality of sensors, emitters, or reflectors; or
the virtual reality system of claim 6, wherein the flight emulator (100) comprises a head-mounted display worn by the user (110), and wherein the head-mounted display is configured to replicate visual imagery related to the virtual or remote slave aircraft (204) and further configured to continuously adjust the imagery in response to head movement of the user (110) detected by a plurality of sensors, emitters, or reflectors coupled to the head-mounted display.

8. The master aircraft (202) of claim 3 or of any preceding master aircraft (202) claim dependent directly or indirectly from claim 3, wherein the virtual or remote slave aircraft (204) is controlled by a slave flight emulator (100a1) and wherein the flight emulator (100) is configured to control the slave flight emulator (100a1) when the user (110) is virtually teleported into the virtual or remote slave aircraft (204); or
the virtual reality flight system of claim 3 or of any preceding virtual reality flight system claim dependent directly or indirectly from claim 3, wherein the virtual or remote slave aircraft (204) is controlled by a slave flight emulator (100a1), and wherein the flight emulator (100) is configured to control the slave flight emulator (100a1) when the user (110) is virtually teleported into the virtual or remote slave aircraft (204).

9. A method of operating a virtual reality flight system, comprising:
providing a master aircraft (202) comprising a virtual reality flight emulator (100), the virtual reality flight emulator (100) comprising a pilot control interface (102) ;
virtually teleporting a user (110) of the virtual reality flight emulator (100) into a virtual or remote slave aircraft (204) connected in communication to the master aircraft (202);
providing an input via the pilot control interface (102) to operate the virtual or remote slave aicraft (204);
the method **characterised by** the virtual reality flight emulator (100) comprising a plurality of galvanic vestibular stimulation (GVS) (117) devices worn by the user (110); and
operating the GVS devices (117) to minimize for the user (110) the perception of the motion of, orientation of, or forces acting on the master aircraft (202) while simulating the motion of, orientation of, or forces acting on the virtual or remote slave aircraft (204).

10. The method of claim 9, further comprising: operating the virtual or remote slave aircraft (204) in response to an input made by the user (110) into the pilot control interface (102) when the user (110) is virtually teleported into the virtual or remote slave aircraft (204).

11. The method of claim 10, further comprising: replicating visual imagery related to the virtual or remote slave aircraft (204) on a head-mounted display worn by the user (110); and continuously adjusting the imagery in response to head movement of the user (110).

## Patentansprüche

1. Master-Flugzeug (202), umfassend:
einen Virtual-Reality-Flugemulator (100), umfassend:
eine Pilotsteuerschnittstelle (102);
wobei der Flugemulator (100) dazu ausgelegt ist, mit der Pilotsteuerschnittstelle (102) ein virtuelles oder entferntes, über ein Netzwerk (208) mit dem Flugemulator (100) verbundenes Slave-Flugzeug (204) zu steuern, wenn ein Benutzer (110) des Flugemulators (100) sich virtuell über das Netzwerk (208) in das virtuelle oder entfernte Slave-Flugzeug (204) teleportiert, **dadurch gekennzeichnet, dass** der Flugemulator (100) eine Vielzahl von galvanischen Gleichgewichtsstimulations(GVS)-Vorrichtungen (117) umfasst, die durch den Benutzer (110) getragen werden; und
wobei die GVS-Vorrichtungen (117) dazu ausgelegt sind, für den Benutzer (110) die Wahrnehmung der Bewegung oder Ausrichtung des Master-Flugzeugs (202) oder der auf das Master-Flugzeug (202) wirkenden Kräfte zu minimieren, während sie die Bewegung oder Ausrichtung des virtuellen oder entfernten Slave-Flugzeugs (204) oder die auf das virtuelle oder entfernte Slave-Flugzeug (204) wirkenden Kräfte simulieren, wenn der Benutzer (110) virtuell in das virtuelle oder entfernte Slave-Flugzeug (204) teleportiert ist.

2. Virtual-Reality-Flugsystem, umfassend:
das Master-Flugzeug (202) nach Anspruch 1; und
mindestens ein virtuelles oder entferntes Slave-Flugzeug (204), das über ein Netzwerk (208) kommunizierend mit dem Flugemulator (100) verbunden ist.

3. Master-Flugzeug (202) nach Anspruch 1, wobei die Pilotsteuerschnittstelle (102) dazu ausgelegt ist, dem Benutzer (110) zu ermöglichen, den Betrieb des virtuellen oder entfernten Slave-Flugzeugs (204) zu steuern, wenn der Benutzer (110) virtuell in das virtuelle oder entfernte Slave-Flugzeug (204) teleportiert ist; oder
Virtual-Reality-Flugsystem nach Anspruch 2, wobei die Pilotsteuerschnittstelle (102) dazu ausgelegt ist, dem Benutzer (110) zu ermöglichen, den Betrieb des virtuellen oder entfernten Slave-Flugzeugs (204) zu steuern, wenn der Benutzer (110) virtuell in das virtuelle oder entfernte Slave-Flugzeug (204) teleportiert ist.

4. Master-Flugzeug (202) nach Anspruch 3, wobei sich die GVS-Vorrichtungen (117) jeweils hinter einem linken und einem rechten Ohr und jeweils an der Vorder- und Rückseite eines Kopfes des Benutzers (110) befinden.

5. Virtual-Reality-Flugsystem nach Anspruch 3, wobei die GVS-Vorrichtungen (117) dazu ausgelegt sind, selektiv Strom zwischen den GVS-Vorrichtungen (117) zu leiten, die bewirken, dass der Benutzer (110) die Bewegung oder Ausrichtung des virtuellen oder entfernten Slave-Flugzeugs (204) oder die auf das virtuelle oder entfernte Slave-Flugzeug (204) wirkenden Kräfte spürt, wenn der Benutzer (110) virtuell in das virtuelle oder entfernte Slave-Flugzeug (204) teleportiert ist.

6. Master-Flugzeug (202) nach Anspruch 4, wobei die GVS-Vorrichtungen (117) dem Benutzer (110) als Reaktion auf eine Eingabe des Benutzers (110) über die Pilotsteuerschnittstelle (102) zum Steuern des virtuellen oder entfernten Slave-Flugzeugs (204) Änderungen im Nicken, Rollen und Gieren des virtuellen oder entfernten Slave-Flugzeugs (204) simulieren, wenn der Benutzer (110) virtuell in das virtuelle oder entfernte Slave-Flugzeug (204) teleportiert ist; oder
Virtual-Reality-Flugsystem nach Anspruch 5, wobei die GVS-Vorrichtungen (117) dem Benutzer (110) als Reaktion auf eine Eingabe des Benutzers (110) über die Pilotsteuerschnittstelle (102) zum Steuern des virtuellen oder entfernten Slave-Flugzeugs (204) Änderungen im Nicken, Rollen und Gieren des virtuellen oder entfernten Slave-Flugzeugs (204) vermitteln, wenn der Benutzer (110) virtuell in das virtuelle oder entfernte Slave-Flugzeug (204) teleportiert ist.

7. Master-Flugzeug (202) nach Anspruch 6, wobei der Flugemulator (100) ein am Kopf befestigtes Display umfasst, das durch den Benutzer (110) getragen wird, und wobei das am Kopf befestigte Display dazu ausgelegt ist, visuelle Bilder zu replizieren, die sich auf das virtuelle oder entfernte Slave-Flugzeug (204) beziehen, und ferner dazu ausgelegt ist, die Bilder als Reaktion auf Kopfbewegungen des Benutzers (110), die durch eine Vielzahl von Sensoren, Emittern oder Reflektoren verfolgt werden, kontinuierlich anzupassen; oder
Virtual-Reality-Flugsystem nach Anspruch 6, wobei der Flugemulator (100) ein am Kopf befestigtes Display umfasst, das durch den Benutzer (110) getragen wird, und wobei das am Kopf befestigte Display dazu ausgelegt ist, visuelle Bilder wiederzugeben, die sich auf das virtuelle oder entfernte Slave-Flugzeug (204) beziehen, und ferner dazu ausgelegt ist, die Bilder als Reaktion auf Kopfbewegungen des Benutzers (110), die durch eine Vielzahl von mit dem am Kopf befestigten Display gekoppelten Sensoren, Emittern oder Reflektoren erfasst werden, kontinuierlich anzupassen.

8. Master-Flugzeug (202) nach Anspruch 3 oder einem vorhergehenden Anspruch eines Master-Flugzeugs (202) in direkter oder indirekter Abhängigkeit von Anspruch 3, wobei das virtuelle oder entfernte Slave-Flugzeug (204) durch einen Slave-Flugemulator (100a1) gesteuert wird und wobei der Flugemulator (100) dazu ausgelegt ist, den Slave-Flugemulator (100a1) zu steuern, wenn der Benutzer (110) virtuell in das virtuelle oder entfernte Slave-Flugzeug (204) teleportiert ist; oder
Virtual-Reality-Flugsystem nach Anspruch 3 oder einem vorhergehenden Anspruch eines Virtual-Reality-Flugsystems in direkter oder indirekter Abhängigkeit von Anspruch 3, wobei das virtuelle oder entfernte Slave-Flugzeug (204) durch einen Slave-Flugemulator (100a1) gesteuert wird und wobei der Flugemulator (100) dazu ausgelegt ist, den Slave-Flugemulator (100a1) zu steuern, wenn der Benutzer (110) virtuell in das virtuelle oder entfernte Slave-Flugzeug (204) teleportiert ist.

9. Verfahren zum Betreiben eines Virtual-Reality-Flugsystems, umfassend:
Bereitstellen eines Master-Flugzeugs (202), das einen Virtual-Reality-Flugemulator (100) umfasst, wobei der Virtual-Reality-Flugemulator (100) eine Pilotsteuerschnittstelle (102) umfasst;
virtuelles Teleportieren eines Benutzers (110) des Virtual-Reality-Flugemulators (100) in ein virtuelles oder entferntes Slave-Flugzeug (204), das kommunizierend mit dem Master-Flugzeug (202) verbunden ist;
Bereitstellen eines Eingangs über die Pilotsteuerschnittstelle (102) zum Betreiben des virtuellen oder entfernten Slave-Flugzeugs (204);
wobei das Verfahren durch den Virtual-Reality-Flugemulator (100) gekennzeichnet ist, der eine Vielzahl von galvanischen Gleichgewichtsstimulations(GVS)-Vorrichtungen (117) umfasst, die durch den Benutzer (110) getragen werden; und
Betreiben der GVS-Vorrichtungen (117), um für den Benutzer (110) die Wahrnehmung der Bewegung oder Ausrichtung des Master-Flugzeugs (202) oder der auf das Master-Flugzeug (202) wirkenden Kräfte zu minimieren, während sie die Bewegung oder Ausrichtung des virtuellen oder entfernten Slave-Flugzeugs (204) oder die auf das virtuelle oder entfernte Slave-Flugzeug (204) wirkenden Kräfte simulieren.

10. Verfahren nach Anspruch 9, ferner umfassend: Betreiben des virtuellen oder entfernten Slave-Flugzeugs (204) als Reaktion auf eine Eingabe durch den Benutzer (110) in die Pilotsteuerschnittstelle (102), wenn der Benutzer (110) virtuell in das virtuelle oder entfernte Slave-Flugzeug (204) teleportiert ist.

11. Verfahren nach Anspruch 10, ferner umfassend: Replizieren visueller Bilder, die sich auf das virtuelle oder entfernte Slave-Flugzeug (204) beziehen, auf einem am Kopf befestigten Display, das durch den Benutzer (110) getragen wird; und kontinuierliches Anpassen der Bilder als Reaktion auf Kopfbewegungen des Benutzers (110).

## Revendications

1. Aéronef maître (202), comprenant :
un émulateur de vol à réalité virtuelle (100), comprenant :
une interface de commande de pilote (102) ;
dans lequel l'émulateur de vol (100) est configuré pour commander, à l'aide de l'interface de commande de pilote (102), un aéronef esclave virtuel ou distant (204) connecté par l'intermédiaire d'un réseau (208) à l'émulateur de vol (100) lorsqu'un utilisateur (110) de l'émulateur de vol (100) se téléporte virtuellement par l'intermédiaire du réseau (208) dans l'aéronef esclave virtuel ou distant (204), **caractérisé en ce que** l'émulateur de vol (100) comprend une pluralité de dispositifs de stimulation vestibulaires galvaniques (GVS) (117) portés par l'utilisateur (110) ; et
dans lequel les dispositifs GVS (117) sont configurés pour minimiser, chez l'utilisateur (110), la perception du mouvement de l'aéronef maître (202), de son orientation ou de forces agissant sur celui-ci, tout en simulant le mouvement de l'aéronef esclave virtuel ou distant (204), son orientation ou les forces agissant sur celui-ci, lorsque l'utilisateur (110) est téléporté virtuellement dans l'aéronef esclave virtuel ou distant (204) .

2. Système de vol à réalité virtuelle, comprenant :
l'aéronef maître (202) selon la revendication 1 ; et
au moins un aéronef esclave virtuel ou distant (204) connecté en communication par l'intermédiaire d'un réseau (208) à l'émulateur de vol (100).

3. Aéronef maître (202) selon la revendication 1, dans lequel l'interface de commande de pilote (102) est configurée pour permettre à l'utilisateur (110) de commander le fonctionnement de l'aéronef esclave virtuel ou distant (204) lorsque l'utilisateur (110) est téléporté virtuellement dans l'aéronef esclave virtuel ou distant (204) ; ou
système de vol à réalité virtuelle selon la revendication 2, dans lequel l'interface de commande de pilote (102) est configurée pour permettre à l'utilisateur (110) de commander le fonctionnement de l'aéronef esclave virtuel ou distant (204) lorsque l'utilisateur (110) est téléporté virtuellement dans l'aéronef esclave virtuel ou distant (204).

4. Aéronef maître (202) selon la revendication 3, dans lequel les dispositifs GVS (117) sont situés derrière chacune des oreilles gauche et droite et sur chacune des parties avant et arrière de la tête de l'utilisateur (110).

5. Système de vol à réalité virtuelle selon la revendication 3, dans lequel les dispositifs GVS (117) sont configurés pour faire passer sélectivement un courant entre les dispositifs GVS (117) qui provoquent chez l'utilisateur (110) la sensation de mouvement de l'aéronef esclave virtuel ou distant (204), de son orientation ou de forces agissant sur celui-ci, lorsque l'utilisateur (110) est téléporté virtuellement dans l'aéronef esclave virtuel ou distant (204).

6. Aéronef maître (202) selon la revendication 4, dans lequel les dispositifs GVS (117) simulent des variations de tangage, de roulis et de lacet de l'aéronef esclave virtuel ou distant (204) chez l'utilisateur (110) lorsque l'utilisateur (110) est téléporté virtuellement dans l'aéronef esclave virtuel ou distant (204) en réponse à une entrée effectuée par l'utilisateur (110) via l'interface de commande de pilote (102) pour commander l'aéronef esclave virtuel ou distant (204) ; ou
système de vol à réalité virtuelle selon la revendication 5, dans lequel les dispositifs GVS (117) communiquent à l'utilisateur (110) des variations de tangage, de roulis et de lacet de l'aéronef esclave virtuel ou distant (204) lorsque l'utilisateur (110) est téléporté virtuellement dans l'aéronef esclave virtuel ou distant (204) en réponse à une entrée effectuée par l'utilisateur (110) via l'interface de commande de pilote (102) pour commander l'aéronef esclave virtuel ou distant (204).

7. Aéronef maître (202) selon la revendication 6, dans lequel l'émulateur de vol (100) comprend un afficheur monté sur la tête et porté par l'utilisateur (110), et dans lequel l'afficheur monté sur la tête est configuré pour reproduire l'imagerie visuelle concernant l'aéronef esclave virtuel ou distant (204) et est en outre configuré pour ajuster en continu l'imagerie en réponse au mouvement de la tête de l'utilisateur (110) poursuivi par une pluralité de capteurs, d'émetteurs ou de réflecteurs ; ou
système de vol à réalité virtuelle selon revendication 6, dans lequel l'émulateur de vol (100) comprend un afficheur monté sur la tête et porté par l'utilisateur (110), et dans lequel l'afficheur monté sur la tête est configuré pour reproduire l'imagerie visuelle concernant l'aéronef esclave virtuel ou distant (204) et est en outre configuré pour ajuster en continu l'imagerie en réponse au mouvement de la tête de l'utilisateur (110) détecté par une pluralité de capteurs, d'émetteurs ou de réflecteurs reliés à l'afficheur monté sur la tête.

8. Aéronef maître (202) selon la revendication 3 ou selon l'une quelconque des revendications d'aéronef maître précédentes (202) dépendant directement ou indirectement de la revendication 3, dans lequel l'aéronef esclave virtuel ou distant (204) est commandé par un émulateur de vol esclave (100a1) et dans lequel l'émulateur de vol (100) est configuré pour commander l'émulateur de vol esclave (100a1) lorsque l'utilisateur (110) est téléporté virtuellement dans l'aéronef esclave virtuel ou distant (204) ; ou
système de vol à réalité virtuelle selon la revendication 3 ou selon l'une quelconque des revendications de système de vol à réalité virtuelle précédentes dépendant directement ou indirectement de la revendication 3, dans lequel l'aéronef esclave virtuel ou distant (204) est commandé par un émulateur de vol esclave (100a1), et dans lequel l'émulateur de vol (100) est configuré pour commander l'émulateur de vol esclave (100a1) lorsque l'utilisateur (110) est téléporté virtuellement dans l'aéronef esclave virtuel ou distant (204).

9. Procédé pour faire fonctionner un système de vol à réalité virtuelle, comprenant :
la fourniture d'un aéronef maître (202) comprenant un émulateur de vol à réalité virtuelle (100),
l'émulateur de vol à réalité virtuelle (100) comprenant une interface de commande de pilote (102) ;
la téléportation virtuelle d'un utilisateur (110) de l'émulateur de vol à réalité virtuelle (100) dans un aéronef esclave virtuel ou distant (204) connecté en communication à l'aéronef maître (202) ;
la fourniture d'une entrée via l'interface de commande de pilote (102) pour faire fonctionner l'aéronef esclave virtuel ou distant (204) ;
le procédé étant **caractérisé en ce que** l'émulateur de vol à réalité virtuelle (100) comprend une pluralité de dispositifs de stimulation vestibulaires galvaniques (GVS) (117) portés par l'utilisateur (110) ; et
la mise en fonctionnement des dispositifs GVS (117) pour minimiser, chez l'utilisateur (110), la perception du mouvement de l'aéronef maître (202), de son orientation ou de forces agissant sur celui-ci, tout en simulant le mouvement de l'aéronef esclave virtuel ou distant (204), son orientation ou les forces agissant sur celui-ci.

10. Procédé selon la revendication 9, comprenant en outre : le fait de faire fonctionner l'aéronef esclave virtuel ou distant (204) en réponse à une entrée effectuée par l'utilisateur (110) dans l'interface de commande de pilote (102) lorsque l'utilisateur (110) est téléporté virtuellement dans l'aéronef esclave virtuel ou distant (204).

11. Procédé selon la revendication 10, comprenant en outre : la reproduction d'une imagerie visuelle concernant l'aéronef esclave virtuel ou distant (204) sur un afficheur monté sur la tête de l'utilisateur (110) ; et l'ajustement continu de l'imagerie en réponse à des mouvements de la tête de l'utilisateur (110) .
